Europäisches Patentamt

European Patent Office

Office européen des brevets

(11) Veröffentlichungsnummer: **0 076 898**
A1

# EUROPÄISCHE PATENTANMELDUNG

(21) Anmeldenummer: 82107081.0

(22) Anmeldetag: 05.08.82

(51) Int. Cl.³: **C 02 F 3/10**, C 02 F 3/06, C 02 F 1/52

(30) Priorität: 08.10.81 CH 6449/81

(43) Veröffentlichungstag der Anmeldung: 20.04.83
Patentblatt 83/16

(84) Benannte Vertragsstaaten: **DE FR GB IT**

(71) Anmelder: **GEBRÜDER SULZER AKTIENGESELLSCHAFT**, Zürcherstrasse 9, CH-8401 Winterthur (CH)

(72) Erfinder: **Gros, Henry, Dr., Geiselweidstrasse 6/6, CH-8400 Winterthur (CH)**
Erfinder: **Hammann, Carl, Beethovenstrasse 10, D-6748 Bergzabern (DE)**
Erfinder: **Witow, Joseph, Licherstrasse 16, D-6309 Münzenberg (DE)**

(74) Vertreter: **Dipl.-Ing. H. Marsch Dipl.-Ing. K. Sparing Dipl.-Phys.Dr. W.H. Röhl Patentanwälte, Rethelstrasse 123, D-4000 Düsseldorf (DE)**

(54) **Anlage für die biologische Reinigung von Wasser oder Abwasser.**

(57) Das Festbett ist als Mischbett (6) aus einem adsorbierenden körnigen Material (z.B. Aktivkohle) und einem nicht adsorbierenden körnigen Medium (z.B. Bims) ausgebildet.

Gegenüber einem Festbett, das nur aus adsorbierendem körnigen Material besteht, sollen dadurch der Druckabfall über dem Festbett erniedrigt und die Laufzeit des Filterfeldes (1) zwischen zwei Rückspülungen verlängert werden, ohne die Eliminationsleistung für gelöste organische Stoffe ins Gewicht fallend zu beeinträchtigen.

EP 0 076 898 A1

0076898

P. 5664/Wg/IS

Gebrüder Sulzer, Aktiengesellschaft, Winterthur/Schweiz

## Anlage für die biologische Reinigung von Wasser oder Abwasser

Die Erfindung betrifft eine Anlage für eine biologische Reinigung von mit gelösten organischen Schmutzstoffen beladenem Wasser oder Abwasser mit mindestens einem rückspülbaren Filterfeld, bei dem die zu behandelnde Flüssigkeit nach einer Begasung mit mindestens sauerstoffhaltigem Gas durch mindestens ein Festbett aus körnigem Filtermaterial filtriert wird, das ein gelöste organische Stoffe adsorbierendes Material enthält und mindestens teilweise mit einer aeroben Mikrofauna belegt ist.

Anlagen der vorstehend genannten Art sind beispielsweise aus der DE-OS 21 09 022 bekannt; derartige Anlagen haben durch ihre gekoppelte Wirkung von Adsorption und biologischem Abbau eine gesteigerte Eliminationswirkung für gelöste organische Schmutzstoffe. Zum einen finden nämlich die Mikroorganismen in den an den adsorbierenden Oberflächen des Adsorbens adsorbierten und haftenden Schmutzstoffen ein erhöhtes Nahrungsangebot, also besonders günstige Lebensbedingungen, vor. Zum anderen bewirken die Mikroorganismen in gewissem Umfang eine dauernde Regenerierung der Adsorber-Oberfläche durch ihren Verzehr von adsorbierter Substanz. Sie "katalysieren" also die Elimination der gelösten organischen Schmutzstoffe.

Bevorzugte adsorbierende Materialien für die geschilderten Filter sind Aktivkohle, Adsorberharz und/oder Aluminiumoxid (aktivierte Tonerde); diese Materialien werden dabei in Körnungen eingesetzt, die relativ geringe Korngrössen
- beispielsweise 0,5 - 2,5 mm - haben. Mit Schwebstoffen,
d.h. mit festen Schmutzstoffen beladene Abwässer, bewirken
daher, dass das "freie" Volumen zwischen den Körnern
relativ rasch ausgefüllt wird und das Festbett verstopft.
Infolgedessen entsteht nach kurzer Zeit ein erheblicher
Druckabfall in dem Festbett.

Aufgabe der Erfindung ist es, diesen Druckabfall zu vermindern und damit die Laufzeit des Filters zu verlängern,
ohne die durch die Verwendung von adsorbierenden Materialien
gesteigerte Abbauwirkung für gelöste organische Stoffe
ins Gewicht fallend zu beeinträchtigen. Diese Aufgabe wird
erfindungsgemäss dadurch gelöst, dass das Festbett aus
einem Mischbett besteht, das neben dem adsorbierenden,
körnigen Material mindestens ein nicht adsorbierendes,
körniges Medium enthält.

Als nicht adsorbierende, körnige Medien dienen dabei beispielsweise Bims, Blähton oder geeignete Kunststoffe.
Versuche haben ergeben, dass die Eliminationsleistung für
gelöste organische Schmutzstoffe gegenüber einem Festbett,
das nur aus einem adsorbierenden Material, beispielsweise
Aktivkohle, besteht, praktisch konstant bleibt, der Druckabfall aber soweit erniedrigt wird, dass die Laufzeiten
zwischen zwei Rückspülungen bei einer gegebenen Schwebstoffkonzentration auf das Dreifache steigen. Es ist
somit möglich, die Anlage mit praktisch denselben Raumbelastungen - d.h. gleichen Reinigungsleistungen pro Volumeneinheit für eine gegebene Schmutzstoffmenge - in beiden
Fällen, d.h. mit einem Mischbett oder mit reinem Adsorbens,
zu fahren. Es wird vermutet, dass der Kontakt zwischen
adsorbierenden und nicht adsorbierenden Oberflächen der Körner bewirkt, dass auch die nicht adsorbierenden inerten Flächen durch das Adsorbens zu einem erhöhten Festhalten der Schmutzstoffe aktiviert werden.

Ein weiterer sehr wesentlicher Vorteil der Erfindung besteht in dem entscheidend verminderten Bedarf an - gegenüber dem inerten "Füllmedium" relativ kostpielig und aufwendig herzustellenden - adsorbierenden Material.

Die genannten Laufzeiten sind dabei bestimmt durch das Erreichen eines gegebenen Druckabfalls - beispielsweise 1 mWS - oder durch das Unterschreiten einer bestimmten minimalen Sauerstoffkonzentration - beispielsweise 0,2 mg/l - im Filtrat.

Die weitgehend gleichmässige Verteilung der beiden Stoffe im Mischbett lässt sich verbessern, wenn das nicht adsorbierende Medium eine geringere Dichte und eine gröbere Körnung als das adsorbierende Material hat. Die bevorzugten Körnungen für die nicht adsorbierenden Medien betragen dabei 2 - 4 mm, während ihre Dichten zwischen 1,1 g/cm$^3$ und 1,3 g/cm$^3$ liegen.

Weiterhin können - beispielsweise für eine Vor- oder Nachfiltration zum Ausscheiden von vorhandenen oder während der Filtration gebildeten Schwebstoffen - vorteilhafterweise neben dem Mischbett mindestens im wesentlichen davon getrennte weitere Filterschichten vorgesehen sein, wofür sich beispielsweise für ein Vorfilter als Filtermaterialien handelsübliche Kunststoffe oder geblähte Mineralien mit Körnungen von 4 - 6 mm eigenen würden, während sich nachgeschaltete Filterschichten aus den bekannten und bewährten Filtermaterialien, insbesondere aus Quarzsand mit einer Körnung von 0,5 - 1,5 mm, bewährt haben.

0076898

Als bevorzugter geeigneter Stoff für das nicht adsorbierende Medium hat sich Bims mit einer Korngrösse von 1,5 - 4 mm, insbesondere von 2 - 3 mm, herausgestellt, während für das adsorbierende Medium vor allem Aktivkohle mit einer Körnung von 0,5 - 2,5 mm und einer Hauptkorngrösse um 1,6 mm in Frage kommt.

Weiterhin hat sich experimentell ein Anteil des nicht adsorbierenden Mediums an der Festbett-Mischung von 20 - 60, insbesondere von etwa 30 Vol.-%, als vorteilhaft erwiesen.

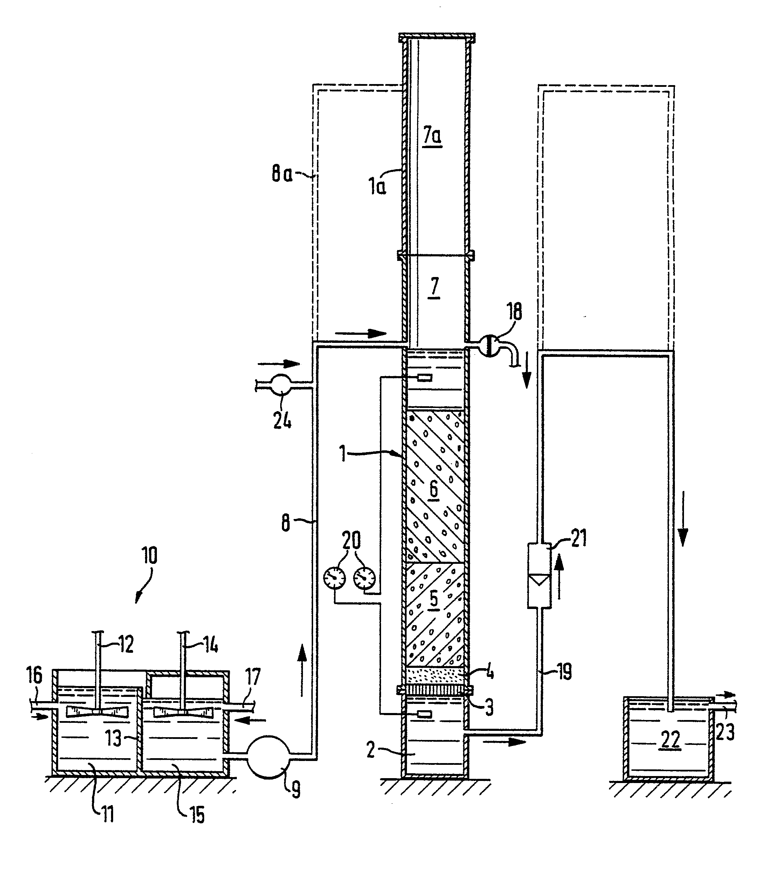

Im folgenden wird die Erfindung anhand eines Ausführungsbeispiels im Zusammenhang mit der Zeichnung näher erläutert.

Die einzige Figur gibt schematisch eine einstufige Versuchsanlage für die Filtration von Abwasser wieder.

Den Kern der gezeigten Anlage bildet das Filterfeld 1, das in einem säulenartigen Hohlkörper aus einem zylindrischen Stahlrohr besteht. Das Filterfeld 1 ist von unten nach oben aufgebaut aus einem Reinwasser- oder Filterraum 2, der nach oben durch einen Siebboden 3 abgeschlossen ist. Auf diesem lagert als tiefste körnige Schicht 4 Kies mit einer Körnung von 4 - 8 mm; er dient als Stützschicht für die folgenden körnigen Filterschichten und zur Verteilung des Filtrats über den ganzen Querschnitt, dessen Durchmesser bei der gezeigten Versuchsanlage beispielsweise 700 mm ist.

Als Nachfiltrationsschicht dient die folgende Schicht 5 aus nicht adsorbierendem Filtermaterial, wie Kies oder Quarzsand, mit einer Körnung von 0,7 - 1,2 mm. Die Sand- oder Kiesschicht 5 ist überlagert von dem erfindungsgemässen Mischbett 6, das aus einer Mischung von 33,3 Vol.-% Bims mit einer Körnung von 2 - 3 mm und 66,6 Vol.-% handels-

0076898

üblicher Aktivkohle mit einer Körnung bis zu 2,5 mm aufgebaut ist. Die Höhe der Schicht 4 beträgt in diesem Ausführungsbeispiel 150 mm und diejenige der Schicht 5 400 mm; das Mischbett 6 ist 1100 mm hoch.

In den Ueberstauraum 7 oberhalb des Mischbettes 6 mündet eine Rohwasserzufuhrleitung 8, die das Filterfeld 1 über eine Förderpumpe 9 mit einer Belüftungsanordnung oder einem Vorbelüftungsbecken 10 verbindet.

Das Vorbelüftungsbecken 10 besteht aus einer Belüftungskammer 11, in der das Rohwasser mittels eines starken Rührwerks 12 mit Luft gesättigt wird. Ueber eine als Tauchwand ausgebildete Trennwand 13 ist die Kammer 11 mit einer Sauerstoffanreicherungskammer 17 verbunden, in der ein weiterer Rührer 14 vorgesehen ist. Dieser Kammer 15 wird über eine Speiseleitung 17 technischer Sauerstoff, beispielsweise aus einer nicht dargestellten Druckgasflasche, zugeführt. Der Rohwassereintritt in die Kammer 11 ist mit 16 bezeichnet.

Am Ueberstauraum 7 ist weiterhin eine nur schematisch angedeutete Schlammwasserklappe 18 vorgesehen; den Druckabfall über dem Festbett 4 - 6 ermittelt man mit Hilfe zweier Druckfühler 20, die den Druck im Ueberstauraum 7 und im Reinwasserraum 2 messen.

Für eine Verlängerung der Verweilzeit des Rohwassers im Ueberstauraum 7 - beispielsweise, wenn zur gleichzeitigen Durchführung einer zusätzlichen Flockungsfiltration vor der Filtration Flockungs- und/oder Flockungshilfsmittel (wie z.B. 1 - 4 g Eisen/$m^3$ /0,1 - 0,2 g/$m^3$ oder eines der bekannten synthetischen Flockungshilfsmittel) über eine Dosierstelle 24 in der Leitung 8 zugegeben werden - ist das Filterfeld 1 durch einen zylindrischen Rohrabschnitt 1a in seiner Höhe vergrössert. Entsprechend wird die Niveauhöhe der Rohwasserzufuhr in das Filterfeld 1 bzw. den zusätzlichen Ueberstauraum 7a mittels der Leitung 8a angehoben.

Aus dem Reinwassersammelraum 2 führt eine Reinwasserleitung 19, in der ein Durchflussmesser 21 vorgsehen ist, in einer das Niveau im Ueberstauraum 7 bzw. 7a bestimmenden Schleife in ein Reinwassersammelbecken 22, aus dem das gereinigte Abwasser über eine Leitung 23 wegfliesst.

Die Wirkungsweise der geschilderten Anlage ist folgende: Als Rohwasser fliesst der Kammer 11 biologisch geklärtes und von Feststoffen mindestens weitgehend freies Abwasser einer Gross-Stadt zu, das jedoch noch mit gelösten organischen Schmutzstoffen, wie z.B. Kohlenwasserstoffe, huminsäureähnliche Stoffe oder Abbauprodukte von Proteinen oder Fettsäuren, befrachtet ist. In der Belüftungs- und der Sauerstoffanreichungskammer 11 bzw. 14 wird eine Konzentration von 20 - 30 mg$O_2$/l in das Rohwasser eingebracht. Anschliessend wird das Festbett des Filterfeldes 1 mit einer Geschwindigkeit von 4 - 10 m$^3$/m$^2$.h mit dem begasten Rohwasser beschickt.

Sein Schmutzstoffinhalt - gemessen als chemischer und als biologischer Sauerstoffbedarf CSB und BSB sowie sein Feststoffanteil F.S. beim Eintritt in das Filterfeld 1 - sind in Spalte A der am Schluss angefügten Tabelle wiedergegeben.

Die Anlage befinde sich im Gleichgewicht, d.h. die Einlaufzeit, bei der sich das Mischbett mit adsorbierten gelösten Stoffen belädt - also im Filtrat einer relativ

0076898

hohe konstante CSB-Elimination, d.h. eine starke Erniedrigung des im Filtrat gemessenen CSB-Wertes festgestellt
wird, der später wieder steigt - sei abgeklungen und die
Mikrofauna voll ausgebildet; beides ist nach einigen
Wochen Laufzeit der Fall.

Nach der Einlaufzeit werden im Filtrat die in Spalte B
der erwähnten Tabelle wiedergegebenen Werte gemessen, denen
zum Vergleich diejenigen eines ähnlich eingefahrenen Festbettes nur aus Aktivkohle mit den gleichen Korngrössen
wie im Mischbett gegenübergestellt sind (Spalte C).

Durch die erfindungsgemässe Anlage werden einerseits die
Feststoffe bis auf Restfeststoff-Konzentrationen von
5 - 10 mg/l entfernt, womit eine Elimination von etwa
1 mgCSB/mgFS gekoppelt ist. Daneben findet eine weitere
CSB-gelöst-Elimination von 20 - 50 mg/l durch die Mikroorganismen im Filterfeld 1 statt.

Wird vor der Filtration Flockungsmittel - beispielsweise
2 mg/Fe/l - zudosiert, so lassen sich die Werte der Spalte B
weiter verbessern, was in Spalte D gezeigt ist. Wie ein
Vergleich der Spalte B und C der Tabelle zeigt, ist die
Reinigungswirkung mit dem erfindungsgemässen Mischbett
praktisch gleichwertig derjenigen eines Festbettes, das
nur aus Aktivkohle besteht. Mit der neuen Anlage haben
sich jedoch bis zur Erreichung eines gegebenen Druckabfalls, bei dem beispielsweise eine Rückspülung erforderlich
ist, Laufzeiten ergeben, die 2 1/2 - 3 mal länger sind
als bei dem Vergleichsfilter mit einem Festbett aus reiner
Aktivkohle.

Tabelle

|  | A | B | C | D |
|---|---|---|---|---|
| CSB (mg/l) | 120 | 50-70 | 45-70 | 35-60 |
| F.S. (mg/l) | 20-40 | 5-10 | 5-10 | $\leq$ 5 |
| BSB (mg/l) | 50 | 10-20 | 10-20 | $\leq$ 12 |
| $O_2$ (mg/l) | 20-30 | 0,2-5 | 0,2-5 | 0,2-5 |
| Laufzeit (h) (bis $\Delta P$ = 1 mWS) | - | > 5 | 2 | 13 |

0076898

Patentansprüche
_____

1. Anlage für eine biologische Reinigung von mit gelösten organischen Schmutzstoffen beladenem Wasser oder Abwasser mit mindestens einem rückspülbaren Filterfeld, bei dem die zu behandelnde Flüssigkeit nach einer Begasung mit mindestens sauerstoffhaltigem Gas durch mindestens ein Festbett aus körnigem Filtermaterial filtriert wird, das ein gelöste organische Stoffe adsorbierendes Material enthält und mindestens teilweise mit einer aeroben Mikrofauna belegt ist, dadurch gekennzeichnet, dass das Festbett aus einem Mischbett (6) besteht, das neben dem adsorbierenden, körnigen Material mindestens ein nicht adsorbierendes, körniges Medium enthält.

2. Anlage nach Anspruch 1, dadurch gekennzeichnet, dass das nicht adsorbierende Medium eine geringere Dichte und eine gröbere Körnung als das adsorbierende Material hat.

3. Anlage nach Anspruch 1, dadurch gekennzeichnet, dass über und/oder unter dem Mischbett (6) mindestens im wesentlichen davon getrennte, weitere Filterschichten (4, 5) vorgesehen sind.

4. Anlage nach Anspruch 1, dadurch gekennzeichnet, dass das nicht adsorbierende Medium aus Bims mit einer Korngrösse von 1,5 - 4, insbesondere 2 - 3, mm besteht.

5. Anlage nach Anspruch 1, dadurch gekennzeichnet, dass der Anteil des nicht adsorbierenden Mediums an der Festbett-Mischung 20 - 60, insbesondere etwa 30, Vol.-% ist.

6. Anlage nach Anspruch 1, dadurch gekennzeichnet, dass die Dichte des nicht adsorbierenden Mediums 1,1 - 1,3 g/cm$^3$ beträgt.

0076898

7. Anlage nach Anspruch 3, dadurch gekennzeichnet, dass das Mischbett (6) von einer Quarzsandschicht (5) unterlagert ist, die eine Körnung zwischen 0,5 und 1,5 mm aufweist.

8. Anlage nach Anspruch 1, dadurch gekennzeichnet, dass dem Filterfeld eine Belüftungsanordnung (10) vorgelagert ist.

9. Anlage nach Anspruch 1, dadurch gekennzeichnet, dass dem Mischbett eine Vorrichtung (24) für die Zugabe von Flockungs- und/oder Flockungshilfsmittel vorgeschaltet ist.

**Europäisches Patentamt**

**EUROPÄISCHER RECHERCHENBERICHT**

0076898

Nummer der Anmeldung

EP 82 10 7081

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| D,Y | DE-A-2 109 022 (HYDRO INTERNATIONAL) <br> * Seite 13, Zeile 4 - Seite 14; Seite 10, 2 letzte Absätze; Seite 16, Ansprüche 1,3-5; Seite 17, Ansprüche 8-10 * | 1,8,9 | C 02 F 3/10 <br> C 02 F 3/06 <br> C 02 F 1/52 |
| Y | FR-A- 748 801 (CARBO-NORIT) <br> * Seite 1, Zeile 43 - Seite 2, Zeile 3; Seite 2, Zeilen 34-41; Seite 3, Zeilen 1-71; Seite 5, Zusammenfassung * | 1,3,7 | |
| A | EP-A-0 001 101 (W. PALMER) <br> * Seite 6, letzter Absatz; Seiten 20,21; Seite 27, Anspruch 1; Seite 29, Anspruch 11; Seite 30, Anspruch 17; Seite 31, Anspruch 26; Seite 32, Anspruch 32 * | 1-3 | |
| | | | RECHERCHIERTE SACHGEBIETE (Int. Cl. 3) |
| A | DE-A-3 024 997 (W. VON DER ENDE) <br> * Seite 6 * | 4 | C 02 F |

Der vorliegende Recherchenbericht wurde für alle Patentansprüche erstellt.

| Recherchenort | Abschlußdatum der Recherche | Prüfer |
|---|---|---|
| DEN HAAG | 10-01-1983 | TEPLY J. |